Europäisches Patentamt

European Patent Office

Office européen des brevets

(11) Publication number: **0 138 284**
A1

## (12) EUROPEAN PATENT APPLICATION

(21) Application number: **84301325.1**

(22) Date of filing: **01.03.84**

(51) Int. Cl.⁴: **F 16 B 25/00**

(30) Priority: **01.10.83 GB 8326359**

(43) Date of publication of application: **24.04.85**
**Bulletin 85/17**

(84) Designated Contracting States: **AT BE CH DE FR GB IT LI LU NL SE**

(71) Applicant: **Headrate Limited, The Shrubbery Church Street, St. Neots Cambridgeshire (GB)**

(72) Inventor: **Stephenson, Frederick Thomas, 73, Milton Avenue Eaton Ford, St. Neots Cambridgeshire (GB)**

(74) Representative: **Nash, Keith Wilfrid et al, KEITH W. NASH & Co. Pearl Assurance House 90-92 Regent Street, Cambridge CB2 1DP (GB)**

(54) **Improved fastening.**

(57) A woodscrew has a head (22) and a shank (10). Part of the shank (10) bears a thread (12), while part (20) is unthreaded. Between the unthreaded part (20) and the head (22) is a frusto-conical region (28) which merges at one end directly into the shank (10) and which serves to increase the strength in this region to prevent the screw breaking.

Title: Improved fastening

DESCRIPTION

Field of invention

This invention concerns fastenings, particularly a metal screw for securing in wood, wood composition and plastics materials.

Background to the invention

Screws for wood and like materials include a shank having a single or multi-start thread profile formed therein extending from a pointed tip at one end to an unthreaded region at the other end thereof which includes a head of enlarged diameter. The latter is conventionally countersunk.

It is a common problem associated with such screws that the torque exerted on the head during the act of screwing-in can result in the head shearing from off the shank. When this occurs with the shank almost completely buried in the material, removal of the broken shank can prove almost impossible.

It has been proposed that a short section of the shank just below the countersunk head be of greater diameter than the remainder of the shank section leading to the thread profile so that the resistance of the screw to shearing at the junction with the head is increased.

- 2 -

Screws incorporating this cylindrical section of greater diameter just below the head have nevertheless still been found to shear under high torque loads and it is an object of the invention to provide an alternative screw design which possesses an even greater torque resistance than previous designs.

## Summary of the invention

According to the present invention a screw for wood and like materials comprising a generally cylindrical shank having a single or multi-start thread profile formed therein extending from a pointed tip at one end to an unthreaded region at the other end thereof and which includes a head of enlarged diameter containing a screwdriver slot at the other end, is formed with a shank section just below the head having a frusto-conical form so that the diameter of the material joining the head to the cylindrical shank progressively increases in diameter between the shank and the underside of the head.

Preferably, the screwdriver slot is of a cross-slot form.

By providing a progressive increase in the diameter of the material leading between the shank and the head, so the radial shoulder which would otherwise exist between the head and the shank is eliminated and the point of weakness presented by such a shoulder is thereby eliminated.

Surprisingly, the increase in torque resistance of the head/shank junction relative to an unmodified screw is much greater than the increase in torque strength obtained by the prior art cylindrical diameter increase.

According to a preferred feature of the invention a double-start thread profile is formed in the shank and the included angle of the triangular thread profile is in the range 50° to 70°, preferably 60°.

According to a further preferred feature of the invention the diameter of the unthreaded shank section between the frusto-conical region leading to the head and the threaded section thereof is of greater diameter than the mean shank diameter of the threaded section.

In this way, the diameter of the screw is kept as large as possible and thus the torque-resisting capability of the screw is kept as high as possible.

According to a yet further preferred feature of the invention, where countersunk, the included angle of the countersunk head is 90° whilst that of the frusto-conical section between it and the cylindrical shank is in the range 25° to 35°, preferably 30°.

Where the head is a so-called round-head, the included angle of the frusto-conical section is in the range 55° to 65°, preferably 60°.

The invention will now be described by way of example with reference to the accompanying drawings in which:

Figure 1 is a side view of a screw constructed in accordance with the invention;
Figure 2 is an axial end view of the head;
Figure 3 is an enlarged view of the head and of the screw of Figure 1, and
Figure 4 is an enlarged view of a round-headed screw embodying the invention.

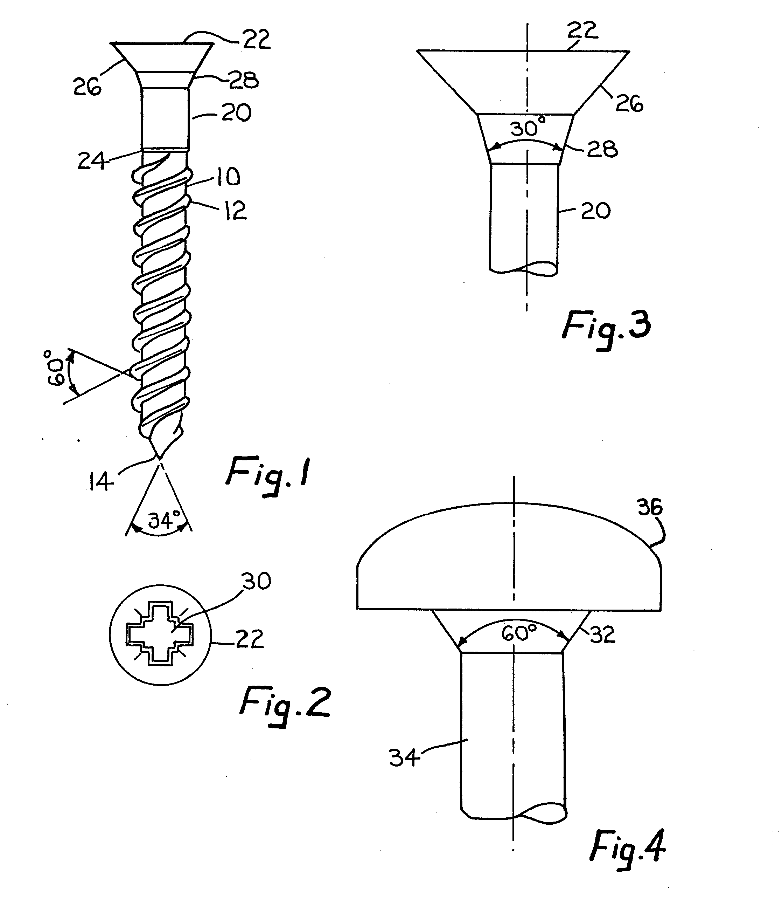

The screw shown in Figures 1 to 3 includes a generally cylindrical shank 10 which is formed with a double-start thread profile 12 which extends over the shank to the pointed tip 14 having an included angle of 34°. The thread angle is 60°.

The section 20 of the shank beyond the thread, towards the head 22, is of a greater diameter than the mean diameter of the threaded section and a small frusto-conical section 24 bridges the junction between the threaded section and the section 20.

The head 22 is countersunk at 26 with an included angle of 90° and a second frusto-conical section 28 is provided between the head countersink 26 and the shank section 20, having an included angle of 30°.

As shown in Figure 2 the head 22 includes a crossed screwdriver slot 30.

Where a round-head is provided as in Figure 4 a similar frusto-conical region 32 is provided between the shank 34 and the head 36 again to increase the torque strength of the screw, particularly where the head joins the shank.

Tests carried out on screws constructed in accordance with the invention and those to conventional design have indicated a significant increase in torsional strength and a decrease in the time required for insertion using a constant torque driving device. The results are tabulated below.

- 5 -

Torsional Strength

| Screw size | | Screws incorporating the invention | Four other makes of screw |
|---|---|---|---|
| 4 x 1 | Best | 2.4 | 2.0 |
| | Worst | 2.2 | 1.6 |
| | Mean | 2.3 | 1.76 |
| 7 x 1 | Best | 4.9 | 3.2 |
| | Worst | 4.2 | 2.2 |
| | Mean | 4.55 | 2.84 |
| 8 x 1 | Best | 5.9 | 3.8 |
| | Worst | 5.6 | 2.8 |
| | Mean | 5.75 | 3.28 |
| 8 x 2 | Best | 5.7 | 3.8 |
| | Worst | 5.4 | 2.8 |
| | Mean | 5.55 | 3.4 |

Insertion times varied as follows: (seconds)

| Screw Size | Screws incorporating the invention | Four other makes of screw | | | |
|---|---|---|---|---|---|
| 4 x 1 | 19.9 | 40.7 | 44.3 | 23.1 | 24.00 |
| 7 x 1 | 14.1 | 31.5 | 32.00 | 18.1 | 18.1 |
| 8 x 1 | 12.00 | 30.2 | 29.1 | 18.1 | 17.4 |
| 8 x 2 | 25.6 | 56.6 | 59.7 | 36.1 | 34.8 |

- 6 -

Although quantitative information relating to pull-out values is not available, tests to-date indicate a significant increase in the force required to pull out a screw constructed in accordance with the invention as compared with prior art designs.

C201/H

CLAIMS

1. A screw for wood and like materials, the screw comprising a head (22) and a shank (10, 20), the shank (10, 20) having a single or multi-start thread profile (12) formed therealong and extending from a pointed tip (14) at one end of the screw to an unthreaded shank section (20) adjacent the head (22) of the screw, the head being of enlarged diameter relative to the shank (10, 20) and containing a screwdriver recess (30), characterized in that the unthreaded shank section (20) includes a frusto-conical (28) region which merges at its narrow end into the shank (10, 20) and at its wide end directly into the head (22) so that the diameter of the material at the junction between the head (22) and the shank (10, 20) progressively increases in diameter between the shank (10, 20) and the underside of the head (22).

2. A screw as claimed in Claim 1, characterized in that the screwdriver recess (30) is of a crosshead form.

3. A screw as claimed in Claim 1 or Claim 2, characterized in that a double-start thread profile (12) is formed along the shank (10).

4. A screw as claimed in Claim 3, characterized in that the thread profile is triangular and the included angle of the thread profile is in the range 50° to 70°.

5. A screw as claimed in any preceding claim,

0138284

- 8 -

characterized in that the diameter of the unthreaded shank section (20) between the frusto-concial region (28) and the threaded shank section (10) is of greater diameter than the mean shank diameter of the threaded section (10).

6. A countersunk head screw characterized in that the included angle of the countersunk head (26) is about 90°, whilst that of the frusto-conical region (28) is in the range 25° to 35°.

7. A round head screw characterized in that the included angle of the frust-conical section (32) is in the range 55° to 65°.

8. A screw substantially as herein described with reference to any one embodiment shown in the accompanying drawings.

1/1

0138284

26 22 28 20 24 10 12 60° 14 34°

Fig.1

30 22

Fig.2

22 26 30° 28 20

Fig.3

36 60° 32 34

Fig.4

| | DOCUMENTS CONSIDERED TO BE RELEVANT | | EP 84301325.1 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | DE - A - 2 228 456 (ARNOLD KNIP- PING GMBH) <br> * Claims1-3; fig. 2; page 2, lines 13-18 * | 1,2,5 | F 16 B 25/00 |
| X | DE - C - 60 330 (THE AMERICAN SCREW COMPANY) <br> * Page 1, fig. 1,2 * | 1,3,5 | |
| X | GB - A - 1 434 301 (JOHN BRADLEY WAGNER) <br> * Claim 1; fig. 1,2 * | 1,2,5 | |
| A | DE - B - 1 085 723 (ONI-METALLWA- RENFABARIK GÜNTER & CO.) <br> * Claim; fig. 1,2 * | 1 | |
| A | GB - A - 2 072 781 (GKN SCREWS & FASTENERS LIMITED) <br> * Claim 1; fig. 1 * | 1 | TECHNICAL FIELDS SEARCHED (Int. Cl.4) <br><br> F 16 B |
| A | GB - A - 808 165 (P.L. ROBERTSON MFG. CO. LIMITED) <br> * Claims8,10; fig. 3-5 * | 1,5 | |

The present search report has been drawn up for all claims

| Place of search | Date of completion of the search | Examiner |
|---|---|---|
| VIENNA | 04-12-1984 | REIF |